# EUROPEAN PATENT SPECIFICATION

(11) **EP 1 069 831 B1**
(45) Date of publication and mention of the grant of the patent: **14.05.2003**
(21) Application number: 99913866.2
(22) Date of filing: 12.03.1999
(51) Int. Cl.: A23G 1/00, A23G 1/04, A23G 3/00

(54) **REDUCED-FAT CONFECTIONERIES COMPRISING EMULSIFYING AGENT COMBINATIONS, AND PREPARATION THEREOF**
FETTREDUZIERTE SUESSIGKEITEN ENTHALTEND KOMBINATIONEN VON EMULGIERMITTELN SOWIE HERSTELLUNG DERSELBEN
CONFISERIES A TENEUR REDUITE EN MATIERES GRASSES RENFERMANT DES COMBINAISONS D'AGENTS EMULSIFIANTS ET TECHNIQUE DE PRODUCTION

(30) Priority: 12.03.1998 US 41325
(43) Date of publication of application: 24.01.2001
(73) Proprietor: Mars, Inc., McLean, VA 22101-3883 (US)
(72) Inventor: KAISER, John, Mark, Manheim, PA 17545 (US); VAN GESTEL, Adrianus, Maria, Johannes, Christiaan, NL 5283 KC Boxtel (NL); VERCAUTEREN, Jozef, Albert, NL-5611 N.P. Eindhoven (NL)
(74) Representative: James, Anthony Christopher W.P.
(86) International application number: US9905457
(87) International publication number: WO99045790

(56) References cited:
- WO-A1-96/19923
- ANON., PRODUCT BROCHURE: PALSGAARD 4125, PALSGAARD, INDUSTRI A/S DENMARK, September 1995, pages 1-33, XP002907185
- ANON., PRODUCT BROCHURE: MITSUBISHI KASEI CORPORATION, "Effect of Addition of Sucrose Fatty Acid Polyesters (SPE) to Chocolate", 26 June 1991, page 1-17, XP002907186

## Description

### BACKGROUND OF THE INVENTION

### Field of the Invention

This invention relates to reduced-fat confectioneries and their methods of preparation. The reduced-fat confectioneries of this invention have a total fat content of below 25%, yet possess full fat texture. Significantly, these reduced-fat confectioneries also possess excellent rheological characteristics and demonstrate excellent performance when used in enrobing, moulding and extruding operations.

### Related Background Art

Confectionery food products, made from ingredients including carbohydrate sweeteners, such as sucrose, and an edible oil or fat such as cocoa butter, are well known. Candy, and particularly chocolate, comprise an important group of these food products.

The most popular chocolate or chocolate candy consumed in the United States is in the form of sweet chocolate or milk chocolate. Chocolate is essentially a mixture of solid-containing ingredients, including cocoa solid ingredients, suspended in fat. Milk chocolate is a confection which contains milk solids, milk fat, chocolate liquor, a nutritive carbohydrate sweetener, cocoa butter and may include a variety of other ingredients such as emulsifying agents, flavorings and other additives. Crumb chocolate is a type of milk chocolate, containing the same ingredients, however, wet milk and carbohydrate sweetener ingredients and optionally chocolate liquor, are pre-combined then co-dried, at elevated temperatures, to form a milk crumb that is then used to prepare the milk chocolate. Sweet chocolate contains higher amounts of chocolate liquor, but lower amounts of milk solids than milk chocolate. Semisweet chocolate requires at least 35% by weight chocolate liquor and is otherwise similar in definition to sweet chocolate. Dark chocolate, generally containing only chocolate liquor, a nutritive carbohydrate sweetener and cocoa butter, is by definition either a sweet chocolate or a semisweet chocolate. Buttermilk chocolate and skim milk chocolate differ from milk chocolate in that the milk fat comes from various forms of sweet cream buttermilk and skim milk, respectively. Skim milk requires the total amount of milk fat to be limited to less than the minimum for milk chocolate. Mixed dairy product chocolates differ from milk chocolate in that the milk solid includes any or all of the milk solids listed for milk chocolate, buttermilk chocolate or skim milk chocolate. White chocolate differs from milk chocolate in that it contains no non-fat cocoa solids.

Chocolate may take the form of solid pieces of chocolate, such as bars or novelty shapes, and may also be incorporated as a component of other, more complex confections where chocolate is combined with and generally coats other foods such as caramel, peanut butter, nougat, fruit pieces, nuts, wafers, ice cream or the like. These foods are characterized as microbiologically shelf-stable at 65°-85°F (18-29°C), under normal atmospheric conditions. Generally, chocolate used to coat or surround foods must be more fluid than chocolates used for plain chocolate solid bars or novelty shapes. The requirements of the intended use of the chocolates will dictate the preferred rheology of the final chocolate.

Since melted chocolate is a suspension of solid particles, e.g., sugar, milk powders and cocoa solids, in a continuous liquid fat phase of cocoa butter, chocolate suspensions have non-Newtonian flow behavior, including the presence of a yield stress. The yield stress represents a minimum threshold of force that must be applied to a suspension, for example the force applied to toothpaste, in order to make it flow. Below this threshold, no flow occurs. The non-Newtonian behavior of chocolate is sometimes described by fitting the rheological data to the equation which defines a yield value and viscosity. This minimum force mentioned above is then referred to as the "yield value". The "plastic viscosity" approximates the work done to keep the suspension flowing uniformly. Alternatively, an apparent viscosity can be used to describe the flow behavior of chocolate. The plastic viscosity and a yield value described herein are derived from the Casson model.

The process of coating chocolate onto a food is known as enrobing. Enrobing is accomplished when chocolate, in a fluid state and having a proper viscosity and yield value, is poured over a food to completely cover the food. Alternatively, the food may be dipped into the fluid chocolate. Proper viscosity and yield value of the chocolate are required for smooth and even flow of the chocolate over the surface of the food to be coated. Thus, enrobing chocolates generally possess yield values of less than 250 dynes/cm² and plastic viscosity values of less than 100 poise.

Chocolate can also be moulded. By moulding, it is meant that chocolate, either plain or mixed with nuts, raisins, crisped rice and the like, is deposited in molds, allowed to cool and hardened into solid pieces and then removed from the mold. Chocolate moulded into plain chocolate pieces may be somewhat more viscous than coating chocolates since the chocolate can be vibrated into a mold over a longer period of time than allowed in enrobing. Accordingly, chocolates used for moulding operations generally may possess yield values of less than 300 dynes/cm² and plastic viscosity values of less than 100 poise.

Novelty shapes, such as chocolate chips, made of plain chocolate may be formed by extrusion, typically onto a cold belt. Extrusion may also be conducted using chocolate in a solid or semi-solid state. Other forming techniques known in the art include flaking, kibbling, sheeting, depositing and the like. The chocolate used for extrusion must be more resistant to flow than chocolate used for moulding and have a high yield value. Chocolates used in extruding operation typically will have yield values of less than 600 dynes/cm² and plastic viscosity values of less than 100 poise. The relatively high yield value are necessary for the chocolate to retain the extruded shape as it hardens.

Chocolate is a suspension of very fine particles (usually less than 50-60 microns) in fat (cocoa butter, milk fat). The fat coats and suspends the particles and provides the mouthfeel typically associated with a smooth, rich chocolate. The amount of cocoa butter present in chocolate affects the rheological properties of the chocolate and, consequently, must be varied according to the intended use of the chocolate. However, when the cocoa butter (fat) content of chocolate is reduced to prepare reduced-fat chocolates, alternate means of achieving the proper rheological properties of the chocolate must be developed.

Molten chocolate is a dispersion of very fine, solid ingredients particles in a fat phase. In dark chocolate, the solid-containing ingredients include sugar and ground cocoa material. In milk chocolate, the solid-containing ingredients include sugar, cocoa material and milk. The fat phase in milk chocolates contains cocoa butter and milk fat. During chocolate manufacturing the sugar, cocoa and milk particles are suspended in a continuous fat phase. By the end of conching, every particle should ideally be coated by a thin film of fat in order to ensure good lubrication. The presence of surface-active and emulsifying agents facilitates the formation of this coating. Emulsifying agents are well known to play a critical role in suspension rheology and are used throughout chocolate manufacturing to alter the rheology (i.e., reduce viscosity and/or yield value) of cocoa suspensions. Soy lecithin is the oldest and most widely used emulsifying agent of ingredient suspensions, and when used at a preferred concentration of about 0.3% to about 0.7% by weight of the finished chocolate, demonstrates a significant viscosity lowering effect. Other emulsifying agents commonly used in chocolates include lecithin derived from vegetable sources such as soybean, safflower, corn, etc., fractionated lecithins enriched in either phosphatidyl choline, or phosphatidyl ethanolamine, or phosphatidyl inositol or any combination thereof, mono-phosphate derivatives of mono- and di-glycerides/diacetyl tartaric acid esters of mono- and di-glycerides (also referred to as PMD/DATEM), monosodium phosphate derivatives of mono-and di-glycerides of edible fats or oils, sorbitan monostearate, polyoxyethylene sorbitan monostearate, hydroxylated lecithin, lactylated fatty acid esters of glycerol and propylene glycol, polyglycerol esters of fatty acids, propylene glycol mono- and di-esters of fats and fatty acids, and the like.

The addition of about 0.1-0.3% by weight soy lecithin typically reduces the viscosity of chocolate by more than 10 times its own weight of cocoa butter. Numerous other emulsifying agents similarly lower the yield value or the plastic viscosity. However, use of emulsifying agents has generally been limited to less than 1% by weight of the chocolate formulation due to problems such as off-flavors, legal controls, or negative rheological effects at higher use rates. U.S. Patent No. 5,464,649 specifically indicates that reduced-fat chocolates containing fat levels significantly lower than about 29% to 33% by weight total fat, cannot be achieved by merely altering the amount and type of emulsifying agent incorporated into the chocolate, since full-fat chocolates already contain about 0.1% to about 0.5% by weight soy lecithin. U.S. Patent No. 5,464,649 discloses a method of obtaining reduced-fat chocolates comprising treating a sugar and fat mixture with water, followed by drying, to provide a special process sugar. Although the yield values of the reduced-fat chocolates produced using the special process sugar and having a total fat content below 25% by weight, are generally below about 50 dynes/cm², the plastic viscosity of these reduced-fat chocolates are generally above 80 poise. The reduced-fat chocolates having a total fat content of about 20% by weight, have plastic viscosity values near 200 poise.

WO 95/10946 discloses a process for the manufacture of reduced-fat chocolates comprising preparing a full fat chocolate using conventional processing, followed by a fat removal process, e.g., pressing. WO 96/17523 discloses a process of manufacture of reduced-fat chocolates by combining chocolates having different fat contents. A chocolate having 18% to 25% by weight total fat was obtained by mixing a high-fat chocolate, that has been flavor developed, with a low-fat chocolate. WO 96/19923 discloses a process for the manufacture of reduced-fat chocolates using a mixture of particulate ingredients that were selectively milled such that not more than 1% by weight of the particles of the mixture are larger than 60 microns and not more than 15% by weight of the particles of the mixture are smaller than 2 microns, and/or not more than 20% of the particles were smaller than 3 microns. The rheological characteristics of these chocolates are not disclosed.

The foregoing represent some attempts to provide reduced-fat chocolate confectioneries using modifications of conventional processing techniques. Each of these methods, however, require additional processing steps, changes in current chocolate manufacturing procedures, or possibly changes in current equipment, that will add to the cost of production of these reduced-fat chocolates. Accordingly, it would be highly desirable to provide reduced-fat chocolate confectioneries, having a total fat content below 25% by weight and having useful rheological properties that may be commercially prepared using conventional equipment and procedures.

### SUMMARY OF THE INVENTION

This invention relates to reduced-fat confectioneries, comprising a fat, solid-containing ingredients, and an emulsifying agent combination, wherein the confectionery contains less than 25% total fat, by weight, and the emulsifying agent combination is a combination of a base emulsifying agent and at least one other emulsifying agent. Significantly, the reduced-fat confectioneries of this invention have rheological properties suitable for enrobing, moulding and extruding operations. The reduced-fat confectioneries of this invention are prepared by mixing the fat and confectionery ingredients, adding a base emulsifying agent to the mixture, followed by adding at least one other emulsifying agent.

### DETAILED DESCRIPTION OF THE INVENTION

The reduced-fat confectioneries of this invention are obtained by employing an emulsifying agent combination in a reduced-fat confectionery mix. The use of the emulsifying agent combinations of this invention enhances the dispersing effects of fat when the total fat content of the confectionery is less than 25%, and particularly when the total fat content is less than 23% by weight, to provide a low-fat or reduced-fat confectionery having the texture of a full-fat confectionery with good rheological characteristics. Advantageously, the preparation of the reduced-fat confectioneries of this invention may be accomplished using conventional ingredients and production scale equipment.

As used herein, the term "good rheological characteristics" means that the reduced-fat confectionery or chocolate has a yield value and plastic viscosity such that the confectionery or chocolate is suitable for processing in enrobing, extruding or moulding operations to form a finished food product. Preferably, the reduced-fat chocolates of this invention are suitable for processing in enrobing, extruding or moulding operations using the same equipment used in processing full-fat chocolates. To be suitable for such processing operations, the reduced-fat confectioneries and chocolates of this invention have a yield value less than 250 dynes/cm², preferably, less than 180 dynes/cm², and more preferably, less than 140 dynes/cm². To be suitable for such processing operations, the reduced-fat confectioneries and chocolates of this invention have a plastic viscosity less than 150 poise, preferably, less than 100 poise. More preferably, the chocolates of this invention have a plastic viscosity of less than 75 poise.

"Chocolate" as used herein refers to confectioneries. Chocolate used in foods in the United States is subject to a standard of identity established by the U.S. Food and Drug Administration (FDA) under the Federal Food, Drug and Cosmetic Act that sets out the requisite ingredients, and proportions thereof, of a confection to permit labelling of the confection as a "chocolate." Non-standardized chocolates are those chocolates which have compositions which fall outside the specified ranges of the standardized chocolates. Chocolates are classified as "non-standardized" chocolates when a specified ingredient is replaced, either partially or completely, such as when the ingredient cocoa butter is replaced with vegetable oils or fats. Any additions or deletions to a chocolate recipe made outside the US FDA standards of identity for chocolate will prohibit use of the term "chocolate" to describe the confectionery. However, as used herein, the term "chocolate" refers to both standard of identity and non-standardized chocolates and other confectioneries.

The term "fat" as used herein, refers to triglycerides typically used in food products, especially confectionery products and chocolate products. Fats useful in this invention include the naturally occurring fats and oils such as cocoa butter, pressed cocoa butter, expelled cocoa butter, solvent extracted cocoa butter, refined cocoa butter, milk fat, anhydrous milk fat, fractionated milk fat, milk fat replacers, butterfat, fractionated butterfat, and other vegetable fat, as well as other modifications of these fats, including but not limited to cocoa butter equivalents (CBE), cocoa butter substitutes (CBS), cocoa butter replacers (CBR), anti-blooming agents, such as behenoyl oleoyl behenate (BOB), reduced calorie fats and/or synthetically modified fats, including reduced calorie fats and non-caloric fat substitutes. A reduced calorie fat is a fat having all the properties of typical fat but having fewer calories than typical fat. A non-caloric fat substitute, e.g. a sucrose polyester, likewise possesses all the typical fat characteristics, but is not absorbed after ingestion and thus is not metabolized. A "full-fat" chocolate has a total fat content greater than 25% by weight and typically, a total fat content of about 25% to about 35% by weight. A "reduced-fat" chocolate has a total fat content less than 25% by weight and preferably between about 19% to about 24.5% by weight.

The chocolates of this invention may additionally contain other ingredients such as nutritive carbohydrate sweeteners, milk solids, cocoa solids, sugar substitutes, natural and artificial flavors (e.g., vanilla, spices, coffee, salt, brown nut-meats, etc., as well as mixtures of these), antioxidants (e.g., preservatives), proteins, and the like.

Use of emulsifying agents in the reduced-fat confectioneries of this invention improves the rheology of confectioneries having less than 25% total fat, by weight, to provide reduced-fat confectioneries having useful viscosity and yield value. Surprisingly, selected emulsifying agent combinations have been identified to provide the reduced-fat confectioneries of this invention having improved rheology over confectioneries prepared using the conventional emulsifying agents, disclosed above. The combination of emulsifying agents constitutes the critical rheology modifying ingredient in the reduced-fat confectioneries and chocolates of this invention. The combination of emulsifying agents works in conjunction with whatever fat is present to provide confectioneries and chocolates with rheology suitable for processing into final products. Emulsifying agent combinations that are particularly useful in the reduced-fat confectioneries of present invention are combinations of a base emulsifying agent with at least one other emulsifying agent. Emulsifying agent ingredients useful herein as a base emulsifying agent include soya bean lecithin (also known as soy lecithin or lecithin), sucrose polyerucate (ER-290, sold by Mitsubishi Kasei Corporation, Japan) fractionated lecithin (sold by Lucas Meyers, Decatur, Illinois), sucrose polystearate (sold by Mitsubishi Kasei Corporation, Japan) mono-phosphate derivatives of mono- and diglycerides/diacetyl tartaric acid esters of mono- and di-glycerides (PMD/DATEM, sold by Quest International, Hoffman Estates, Illinois as Betrflow®), and ammonium phosphatide (YN, sold by Palsgaard, Juelsminde, Denmark). Emulsifying agent ingredients useful herein as the at least one other emulsifying agent include sucrose polyerucate and polyglycerol polyricinoleate, (PGPR- Admul WOL®, sold by Quest International, Hoffman Estates, Illinois). According to this invention, both the base emulsifying agent and the at least one other emulsifying agent may each be comprised of more than one of the useful emulsifying agent ingredients described above.

The reduced-fat confectioneries of the present invention, having a total fat content of less than 25% by weight may be prepared by mixing the fat and confectionery ingredients, adding a base emulsifying agent to the mixture, followed by adding at least one other emulsifying agent, and forming the reduced-fat confectionery. Optionally the reduced-fat confectioneries of this invention are reduced-fat chocolates that may be prepared by the method comprising:
(a) mixing fat and solid-containing chocolate ingredients;
(b) conching the ingredient mixture;
(c) adding a base emulsifying agent to the conched mixture;
(d) adding at least one other emulsifying agent to the mixture containing the base emulsifying agent to form a confectionery mix;
(e) mixing the confectionery mix; and
(f) forming the reduced-fat confectionery;
wherein the base emulsifying agent is selected from the group consisting of sucrose polyerucate, lecithin, fractionated lecithin, mono-phosphate derivatives of mono- and di-glycerides/diacetyl tartaric acid esters of mono- and di-glycerides (PMD/DATEM), sucrose polystearate, ammonium phosphatide, and combinations thereof, and the at least one other emulsifying agent is selected from the group consisting of polyglycerol polyricinoleate, sucrose polyerucate, and combinations thereof.

Optionally, the reduced-fat chocolates of this invention may be prepared according to the above-described method having a total fat content below 23% by weight. When the base emulsifying agent comprises two or more emulsifying agent ingredients (e.g. lecithin and ammonium phosphatides), the emulsifying agent ingredients may be added in any order or may be added simultaneously. The other emulsifying agents are added after the base emulsifying agent, but may be added in any order. Typically, when the emulsifying agent combination comprises more than two emulsifying agent ingredients (e.g., a base emulsifying agent composed of one emulsifying agent ingredient combined with two other emulsifying agent ingredients or a base emulsifying agent composed of two emulsifying agent ingredients combined with one other emulsifying agent ingredient) the emulsifying agent ingredients are typically added sequentially, third after the second, etc.

In the method of the invention, the base emulsifying agent, whether composed of one or more than one of the emulsifying agent ingredients described above, is added to the ingredient mixture to minimize the rheology thereof. Preferably, as limited by current U.S. Food & Drug Agency standards of identity, the base emulsifying agent may be added to the ingredient mixture in a total amount of less than 1.0% by weight. More preferably, the total amount of the base emulsifying agent present in the reduced-fat chocolates of this invention is about 0.1% to about 0.9% by weight of the total weight of the chocolate. Even more preferably, the base emulsifying agent is present in a total amount of about 0.2% to about 0.8% by weight of the total weight of the chocolate; most preferably, in a total amount of about 0.4% to about 0.6% by weight of the total weight of the chocolate.

In the method of this invention, at least one other emulsifying agent is added to the ingredient/base emulsifying agent mixture. The at least one other emulsifying agent is added to the mixture in an amount sufficient to provide the resulting chocolate the desired rheology, as required for the particular use of the final chocolate, e.g. enrobing, extruding or moulding. The selection of emulsifying agent combination and determination of the emulsifying agent concentration to obtain a desired rheology, is considered within the skill of one in the art. Emulsifying agents suitable for use as the other emulsifying agent include sucrose polyerucate, polyglycerol polyricinoleate, or combinations thereof.

Sucrose polyerucate may be used in this invention as either the base emulsifying agent or as the at least one other emulsifying agent. Sucrose polyerucate is a particularly useful emulsifying agent, when used in combination with the emulsifying agents disclosed herein, because it reduces both the plastic viscosity and yield value of the reduced-fat chocolates, even when used at concentrations greater than 1.0% by weight. Without being bound to a particular theory, it is believed that the sucrose polyester displaces cocoa butter at the particle-fat interface thereby 'freeing' cocoa butter. Moreover, unlike lecithin which contains a nominal 40% oil, sucrose polyerucate is not a triglyceride and therefore does not contribute to the total fat of the chocolate; therefore, there is no 'fat penalty' for using higher levels. The sucrose polyerucate may be present in reduced-fat chocolates, having a total fat content of less than 25% by weight, in amount of about 0.1 to about 0.9% by weight of the total weight of the reduced-fat chocolate. Preferably, the sucrose polyerucate may be present in an amount of about 0.2% to about 0.6% by weight of the total weight of the reduced-fat chocolate to provide a reduced-fat chocolate having plastic viscosity values of less than 100 poise and yield values of less than 180 dynes/cm². More preferably, the sucrose polyerucate may be present in an amount of about 0.4% to about 0.5% by weight of the total weight of the reduced-fat chocolate.

Advantageously, reduced-fat chocolates of this invention having a total fat content below 23% by weight and having good rheological characteristics may be obtained using the emulsifying agent combination of sucrose polyerucate and any of the emulsifying agents disclosed herein. The sucrose polyerucate, in combination with at least one other emulsifying agent, may be present in reduced-fat chocolates, having a total fat content of less than 23% by weight, in amount of about 0.1% to about 0.9% by weight of the total weight of the reduced-fat chocolate. Preferably, the sucrose polyerucate may be present in an amount of about 0.2% to about 0.6% by weight of the total weight of the reduced-fat chocolate to provide a reduced-fat chocolate having plastic viscosity values of less than 100 poise and yield values of less than 200 dynes/cm². More preferably, the sucrose polyerucate may be present in an amount of about 0.4% to about 0.5% by weight of the total weight of the reduced-fat chocolate.

Polyglycerol polyricinoleate (PGPR-Admul WOL® from Quest Int'l.) is useful in this invention as the at least one other emulsifying agent. Polyglycerol polyricinoleate, the partial polyglyceryl ester of inter-esterified castor oil fatty acids, has proven very useful in modifying the yield value of high-viscosity chocolates. The PGPR may be present in reduced-fat chocolates, having a total fat content of less than 25% by weight, in amount of about 0.05% to about 0.5% by weight of the total weight of the reduced-fat chocolate. Preferably, the PGPR may be present in an amount of about 0.2% to about 0.35% by weight of the total weight of the reduced-fat chocolate to provide a reduced-fat chocolate having plastic viscosity values of less than 100 poise and yield values of less than 150 dynes/cm². Use of very low amounts of PGPR provides significant benefits for reduced fat chocolates. The combination of PGPR (0.5% by weight) with lecithin (0.5% by weight) reduced the yield value to zero for a reduced-fat chocolate having less than 25% total fat, by weight.

Advantageously, reduced-fat chocolates of this invention having a total fat content below 23% by weight and having good rheological characteristics may be obtained using the emulsifying agent combination of a base emulsifying agent-polyglycerol polyricinoleate. PGPR may be used to improve the rheology of reduced-fat chocolates, having 20% by weight total fat when used at concentrations as low as 0.05% by weight. The PGPR, in combination with a base emulsifying agent, may be present in reduced-fat chocolates, having a total fat content of less than 23% by weight, in amount of about 0.05% to about 0.5% by weight of the total weight of the reduced-fat chocolate to provide a reduced-fat chocolate having plastic viscosity values of less than 100 poise and yield values of less than 175 dynes/cm². Preferably, the PGPR, in combination with a base emulsifying agent, may be present in an amount of about 0.2% to about 0.35% by weight of the total weight of the reduced-fat chocolate.

The rheology of reduced-fat chocolates may be further improved by use of a tri-component emulsifier combination. Addition of sucrose polyerucate (0.2% by weight) and PGPR (0.2% by weight) reduced the yield value over 70% of a reduced-fat base chocolate containing 0.6% by weight lecithin and reduced the plastic viscosity over 45%, compared to the lecithin-containing reduced-fat chocolate.

Preferably, the emulsifying agent combinations providing reduced-fat chocolates having excellent rheological characteristics include the combinations of lecithin-sucrose polyerucate, lecithin-polyglycerol polyricinoleate, lecithin-ammonium phosphatides-polyglycerol polyricinoleate, sucrose polyerucate-polyglycerol polyricinoleate, lecithin-ammonium phosphatides-sucrose polyerucate-polyglycerol polyricinoleate and lecithin-sucrose polyerucate-polyglycerol polyricinoleate, provided however, that when the base emulsifying agent is solely ammonium phosphatides, the at least one other emulsifying agent is not solely polyglycerol polyricinoleate. Use of these preferred emulsifying agent mixtures provides the reduced-fat chocolates of this invention having a total fat content below 23% by weight and having plastic viscosity values of less than 100 poise and yield values of less than 150 dynes/cm².

The Examples which follow are intended as an illustration of certain preferred embodiments of the invention, and no limitation of the invention is implied.

### EXAMPLE 1

A base chocolate, having 22.6 to 22.9% total fat and a micrometer particle size of 20 microns, was prepared by mixing first three of the below-listed ingredients, for 5 minutes, in an RT25 Mixer (Winkworth Machinery, Ltd, Reading, United Kingdom) for 5 hours.

| | Ingredient (% by wt) |
|---|---|
| Sucrose | 53.8 |
| Skim milk powder | 16.0 |
| Chocolate liquor | 14.0 |
| Anhydrous Milk Fat | 3.9 |
| Cocoa butter | 11.4 |
| Emulsifying agents | 1.0 |

The resulting mixture was dry milled to 20 microns (by micrometer) using an ACM10 (Mikropul, Cologne, Germany), and conched to provide a base chocolate using a TRCO1 Mixer (Hermann Bauermeister, Machinen Fabrik, Gmbh, Hamburg-Altona, Germany). The rheology of this base chocolate was modified by addition of the emulsifying agents, listed in Table 1. The emulsifying agent concentration refers to the amount of the emulsifying agents added to the base chocolate. Chocolates were prepared by combining a 2.5 kg portion of the base chocolate, prepared above, and test emulsifier combinations in an Imperator PK Mixer (Joh.-Moes & Zonen. N.V., Amsterdam, Netherlands), and mixing at speed setting '1' for 20 minutes. The rheology (plastic viscosity and yield value) of the resulting chocolate containing the emulsifying agent combination was determined. The emulsifier concentration reported in Table 1 reflects the amount of test emulsifier added to the base chocolate to provide a chocolate having the lowest viscosity. Rheology values of yield and plastic viscosity were derived from flow curves using a Rheolab MC 100 Um rheometer (Physica Mehtechnik Gmbh & Co., Stuttgart, Germany) with a 5 cm diameter 2 degree cone/plate geometry. The following conditions, similar to that described in U.S. Patent No. 5,464,649, were used for measuring the chocolate samples: pre-shear stress of 0 dyne/cm², pre-shear time of 0 minutes, and equilibration time of 1 minute. The experiment mode of shear rate sweep was done at 40°C starting at 1.5 sec⁻¹ ending at 9 sec⁻¹ using a linear rate mode. The ascent time was 8 min. with no hold time at maximum stress followed by an 8 min. descent time. Values from the 'up' and 'down' curves were averaged and reported.

**TABLE 1**

| Sample # | | | | | | |
|---|---|---|---|---|---|---|
| Emulsifier | 1 | 2 | 3 | 4 | 5 | 6 |
| Soy Lecithin | 0.6 | 0.8 | 0.6 | | 0.6 | |
| PGPR^{*} | | 0.2 | | | 0.2 | 0.2 |
| ER-290^{#} | | | 0.4 | 1.0 | 0.2 | 0.8 |
| Viscosity (poise) | 128 | 74.5 | 50.5 | 58 | 68 | 79 |
| Yield Value (dynes/cm²) | 272 | 153 | 201 | 166 | 73 | 24 |

| | | | | | | |
|---|---|---|---|---|---|---|
| * Polyglycerol polyricinoleate | | | | | | |
| ^{#} Sucrose polyerucate | | | | | | |

### EXAMPLE 2

A base chocolate, having 20.3% total fat and a micrometer particle size of 31 microns, was prepared according to the following recipe, having a continuous particle size distribution, according to the procedure disclosed in co-pending U.S. Patent Application No. 09/041,842, entitled "A Rheologically Modified Confectionery Produced By Employing a Particular Particle Size Distribution," filed contemporaneously herewith, and incorporated by reference herein. Each of the ingredients was selectively milled and classified prior to mixing in a Littleford Day model 5 plough mixer (Littleford Day, Inc., Florence, Kentucky) at a speed setting of '4' for 10 hours.

| | Ingredient (% by wt) |
|---|---|
| Sucrose (10X) | 56.4 |
| Skim milk powder | 7.2 |
| Chocolate liquor | 13.9 |
| Anhydrous Milk Fat | 4.7 |
| Cocoa butter | 7.3 |
| Soy lecithin | 0.5 |

The rheology of this base chocolate was further modified by addition of a second emulsifying agent, listed in Table 2. The emulsifier concentration refers to the amount of second emulsifier added to the base chocolate, containing 0.5% soy lecithin. Emulsifier combinations of soy lecithin with each of sucrose polyerucate and polyglycerol polyricinoleate were prepared by combining a 500-600 gram portion of the base chocolate, prepared above, with 0.1% by weight portions of a test emulsifier (PGPR was added in 0.05% by wt portions) in a 60°C water-jacketed Kitchen Aid Professional model mixer equipped with an anchor agitator and mixing at speed setting '6' for 30 minutes. The rheology (plastic viscosity and yield value) of the resulting chocolate containing the emulsifying agent combination was then determined. Rheology values of yield and plastic viscosity were derived from flow curves using a TA Instruments AR1000 rheometer with a 4 cm diameter 4 degree cone/plate geometry. The following conditions, as described in U.S. Patent No. 5,464,649, were used for measuring the chocolate samples: pre-shear stress of 0 dyne/cm², pre-shear time of 0 minutes, and equilibration time of 1 minute. The experiment mode of shear rate sweep was done at 40°C starting at 0 sec⁻¹ ending at 9 sec⁻¹ using a linear rate mode. The ascent time was 8 min. with no hold time at maximum stress followed by an 8 min. descent time. Values from the 'up' and 'down' curves were averaged and reported. Additions of emulsifier and mixing for 30 minute intervals were continued until the rheology of the chocolate stabilized (i.e., flow curves remain unchanged). The optimum emulsifier concentration reported in Table 2 reflects the amount of test emulsifier added to the base chocolate (containing 0.5% by wt lecithin) to provide a chocolate having combined lowest plastic viscosity and yield value. The specific base chocolate of this example had a plastic viscosity of 54.9 poise and a Casson yield value of 92.1 dynes/cm².

**TABLE 2**

| TEST EMULSIFIER ADDED TO BASE CHOCOLATE | MANUFACTURER | Test Emulsifier Concentration (wt %) | Plastic Viscosity (Poise) | Yield Value (dynes/cm²) |
|---|---|---|---|---|
| Sucrose polyerucate | Mitsubishi Chemical | 1.0% | 33.8 | 53.5 |
| PMD/DATEM^{*} | Quest Int'l | 0.4% | 44.4 | 116.9 |
| Fractionated lecithin^{#} | Central Soya | 0.1% | 45.3 | 159.1 |
| PGPR⁺ | Quest Int'l | 0.5% | 96.4 | 0 |
| Ammonium Phosphatides | Palsgaard | 0.3% | 54.7 | 104.9 |

| | | | | |
|---|---|---|---|---|
| * Phosphated mono-and di-glycerides/Diacetyl tartaric acid of mono glycerides | | | | |
| ^{#} Nathin 140 | | | | |
| ⁺ Polyglycerol Polyricinoleate | | | | |

Other variations or modifications, which will be obvious to those skilled in the art, are within the scope and teachings of this invention. This invention is not to be limited except as set forth in the following claims.

## Claims

1. A reduced-fat confectionery comprising fat, solid-containing ingredients, and an emulsifying agent combination, wherein the confectionery comprises less than 25% total fat, by weight, the improvement comprising an emulsifying agent combination effective to provide a yield value of less than 250 dynes/cm² and a plastic viscosity of less than 100 poise, wherein the emulsifying agent combination is comprised of a combination of a base emulsifying agent and at least one other emulsifying agent, the base emulsifying agent is selected from the group consisting of lecithin, fractionated lecithin, sucrose polyerucate, sucrose polystearate, mono-phosphate derivatives of mono- and di-glycerides/diacetyl tartaric acid esters of mono- and di-glycerides, ammonium phosphatides, and combinations thereof, and the at least one other emulsifying agent is selected from the group consisting of sucrose polyerucate, polyglycerol polyricinoleate, and a combination thereof, provided that when the base emulsifying agent is solely ammonium phosphatides, the at least one other emulsifying agent is not solely polyglycerol polyricinoleate.

2. The reduced fat confectionery according to claim 1, wherein the confectionery is chocolate.

3. The reduced-fat confectionery according to claim 2, having plastic viscosity values of less than 100 poise and yield values of less than 180 dynes/cm².

4. The reduced fat confectionery according to claim 2, wherein the base emulsifying agent is present in an amount of about 0.1% to about 0.9% by weight of the total weight of the chocolate.

5. The reduced-fat confectionery according to claim 2, wherein the base emulsifying agent is sucrose polyerucate.

6. The reduced-fat confectionery according to claim 4, wherein the base emulsifying agent is fractionated lecithin.

7. The reduced-fat confectionery according to claim 2, wherein the at least one other emulsifying agent is sucrose polyerucate.

8. The reduced-fat confectionery according to claim 2, wherein the at least one other emulsifying agent is polyglycerol polyricinoleate.

9. The reduced-fat confectionery according to claim 2, wherein the at least one other emulsifying agent is polyglycerol polyricinoleate and sucrose polyerucate.

10. The reduced-fat confectionery according to claim 1, having plastic viscosity values of less than 100 poise and yield values of less than 100 dynes/cm².

11. The reduced-fat confectionery according to claim 1, wherein the confectionery comprises less than 23% total fat, by weight.

12. A method of preparing a reduced-fat confectionery comprising a total fat content of less than 25% by weight and an emulsifying agent combination comprised of a base emulsifying agent and at least one other emulsifying agent, said method comprising:
(a) mixing fat and solid-containing confectionery ingredients;
(b) conching the ingredient mixture;
(c) adding the base emulsifying agent to the mixture;
(d) adding the at least one other emulsifying agent to the mixture containing the base emulsifying agent to form a confectionery mix;
(e) mixing the confectionery mix; and
(f) forming the reduced-fat confectionery;
wherein the base emulsifying agent is selected from the group consisting of lecithin, fractionated lecithin, sucrose polyerucate, sucrose polystearate, mono-phosphate derivatives of mono- and di-glycerides/diacetyl tartaric acid esters of mono- and di-glycerides, ammonium phosphatides and combinations thereof, and the at least one other emulsifying agent is selected from the group consisting of sucrose polyerucate, polyglycerol polyricinoleate, and combinations thereof, provided that when the base emulsifying agent is solely ammonium phosphatides, the at least one other emulsifying agent is not solely polyglycerol polyricinoleate;
and wherein said emulsifying agent combination is effective to provide the reduced-fat confectionery having a yield value of less than 250 dynes/cm² and a plastic viscosity of less than 100 poise.

13. The method according to claim 12, wherein the confectionery is chocolate.

14. The method according to claim 12, having plastic viscosity values of less than 100 poise and yield values of less than 180 dynes/cm².

15. The method according to claim 12, wherein the base emulsifying agent is present in an amount of about 0.1% to about 0.9% by weight of the total weight of the chocolate.

16. The method according to claim 12, wherein step (d) comprises sequential addition of the at least two emulsifying agents.

17. The method according to claim 16, wherein the at least two emulsifying agents are polyglycerol polyricinoleate and sucrose polyerucate.

## Patentansprüche

1. Süßigkeit mit vermindertem Fett, umfassend Fett, Feststoff-enthaltende Inhaltsstoffe und eine Emulsionsmittelkombination, wobei die Süßigkeit weniger als 25 Gew.-% Gesamtfett umfaßt und die Verbesserung eine Kombination von Emulsionsmitteln umfaßt, die wirksam ist, eine Fließgrenze von weniger als 250 Dynes/cm² und eine plastische Viskosität von weniger als 100 Poise bereitzustellen, wobei die Emulsionsmittelkombination eine Kombination eines Grundemulsionsmittels und mindestens eines anderen Emulsionsmittels umfaßt, wobei das Grundemulsionsmittel aus der Gruppe, bestehend aus Lecithin, fraktioniertem Lecithin, Saccharosepolyerucat, Saccharosepolystearat, Monophosphatderivaten von Mono- und Diglyceriden/Diacetylweinsäureestern von Mono- und Diglyceriden, Ammoniumphosphatiden und Kombinationen davon, ausgewählt ist und das mindestens eine andere Emulsionsmittel aus der Gruppe, bestehend aus Saccharosepolyerucat, Polyglycerinpolyrizinoleat und einer Kombination davon, ausgewählt ist, mit der Maßgabe, daß, wenn das Grundemulsionsmittel ausschließlich Ammoniumphosphatide ist, das mindestens eine andere Emulsionsmittel nicht ausschließlich Polyglycerinpolyrizinoleat ist.

2. Süßigkeit mit vermindertem Fett nach Anspruch 1, wobei die Süßigkeit Schokolade ist.

3. Süßigkeit mit vermindertem Fett nach Anspruch 2, die plastische Viskositätswerte von weniger als 100 Poise und Fließgrenzen von weniger als 180 Dynes/cm² aufweist.

4. Süßigkeit mit vermindertem Fett nach Anspruch 2, wobei das Grundemulsionsmittel in einem Anteil von etwa 0,1 Gew.-% bis etwa 0,9 Gew.-% des Gesamtgewichts der Schokolade vorliegt.

5. Süßigkeit mit vermindertem Fett nach Anspruch 2, wobei das Grundemulsionsmittel Saccharosepolyerucat ist.

6. Süßigkeit mit vermindertem Fett nach Anspruch 4, wobei das Grundemulsionsmittel fraktioniertes Lecithin ist.

7. Süßigkeit mit vermindertem Fett nach Anspruch 2, wobei das mindestens eine andere Emulsionsmittel Saccharosepolyerucat ist.

8. Süßigkeit mit vermindertem Fett nach Anspruch 2, wobei das mindestens eine andere Emulsionsmittel Polyglycerinpolyrizinoleat ist.

9. Süßigkeit mit vermindertem Fett nach Anspruch 2, wobei das mindestens eine andere Emulsionsmittel Polyglycerinpolyrizinoleat und Saccharosepolyerucat ist.

10. Süßigkeit mit vermindertem Fett nach Anspruch 1, die plastische Viskositätswerte von weniger als 100 Poise und Fließgrenzen von weniger als 100 Dynes/cm² aufweist.

11. Süßigkeit mit vermindertem Fett nach Anspruch 1, wobei die Süßigkeit weniger als 23 Gew.-% Gesamtfett umfaßt.

12. Verfahren zur Herstellung einer Süßigkeit mit vermindertem Fett, umfassend einen Gesamtfettanteil von weniger als 25 Gew.-% und eine Emulsionsmittelkombination, die ein Grundemulsionsmittel und mindestens ein anderes Emulsionsmittel umfasst, wobei das Verfahren:
(a) das Mischen von Fett und Feststoff-enthaltenden Süßigkeitsinhaltsstoffen,
(b) das Konchieren des Inhaltsstoffgemisches,
(c) das Zugeben des Grundemulsionsmittels zu dem Gemisch,
(d) das Zugeben des mindestens einen anderen Emulsionsmittels zu dem Gemisch, welches das Grundemulsionsmittel enthält, zum Formen eines Süßigkeitsgemisches,
(e) das Mischen des Süßigkeitsgemisches und
(f) das Formen der Süßigkeit mit vermindertem Fett umfaßt,
wobei das Grundemulsionsmittel aus der Gruppe, bestehend aus Lecithin, fraktioniertem Lecithin, Saccharosepolyerucat, Saccharosepolystearat, Monophosphatderivaten von Mono- und Diglyceriden/Diacetylweinsäureestem von Mono- und Diglyceriden, Ammoniumphosphatiden und Kombinationen davon, ausgewählt ist und das mindestens eine andere Emulsionsmittel aus der Gruppe, bestehend aus Saccharosepolyerucat, Polyglycerinpolyrizinoleat und Kombinationen davon, ausgewählt ist, mit der Maßgabe, daß, wenn das Grundemülsionsmittel ausschließlich Ammoniumphosphatide ist, das mindestens eine andere Emulsionsmittel nicht ausschließlich Polyglycerinpolyrizinoleat ist,
und wobei die Emulsionsmittelkombination wirksam ist, der Süßigkeit mit vermindertem Fett eine Fließgrenze von weniger als 250 Dynes/cm² und eine plastische Viskosität von weniger als 100 Poise bereitzustellen.

13. Verfahren nach Anspruch 12, wobei die Süßigkeit Schokolade ist.

14. Verfahren nach Anspruch 12 mit plastischen Viskositätswerten von weniger als 100 Poise und Fließgrenzen von weniger als 180 Dynes/cm².

15. Verfahren nach Anspruch 12, wobei das Grundemulsionsmittel in einem Anteil von etwa 0,1 Gew.-% bis etwa 0,9 Gew.-% des Gesamtgewichts der Schokolade vorliegt.

16. Verfahren nach Anspruch 12, wobei Schritt (d) die aufeinanderfolgende Zugabe von mindestens zwei Emulsionsmitteln umfaßt.

17. Verfahren nach Anspruch 16, wobei die mindestens zwei Emulsionsmittel Polyglycerinpolyrizinoleat und Saccharosepolyerucat sind.

## Revendications

1. Confiserie à teneur réduite en graisses comprenant des graisses, des ingrédients contenant des solides et une combinaison d'agents émulsionnants, dans laquelle la confiserie comprend moins de 25% au total de graisses en poids, l'amélioration comprenant une combinaison d'agents émulsionnants permettant d'obtenir un seuil d'écoulement de moins de 250 dynes/cm² et une viscosité plastique de moins de 100 poises, dans laquelle la combinaison d'agents émulsionnants est constituée d'une combinaison d'un agent émulsionnant de base et d'au moins un autre agent émulsionnant, l'agent émulsionnant de base est choisi dans le groupe constitué de la lécithine, de la lécithine fractionnée, du polyérucate de saccharose, du polystéarate de saccharose, de dérivés monophosphatés d'esters de mono- et diglycérides et d'acide diacétyltartrique, de phosphatides d'ammonium et de leurs combinaisons, et le au moins un autre agent émulsionnant est choisi dans le groupe constitué du polyérucate de saccharose, du polyricinoléate de polyglycérol et leurs combinaisons, pourvu que, lorsque l'agent émulsionnant de base est uniquement constitué de phosphatides d'ammonium, le ou au moins un autre agent émulsionnant ne soit pas uniquement constitué de polyricinoléate de polyglycérol.

2. Confiserie à teneur réduite en graisses selon la revendication 1, dans laquelle la confiserie est du chocolat.

3. Confiserie à teneur réduite en graisses selon la revendication 2, ayant des valeurs de viscosité plastique de moins de 100 poises et des seuils d'écoulement de moins de 180 dynes/cm².

4. Confiserie à teneur réduite en graisses selon la revendication 2, dans laquelle l'agent émulsionnant de base est présent en quantité d'environ 0,1% à environ 0,9% en poids du poids total du chocolat.

5. Confiserie à teneur réduite en graisses selon la revendication 2, dans laquelle l'agent émulsionnant de base est le polyérucate de saccharose.

6. Confiserie à teneur réduite en graisses selon la revendication 4, dans laquelle l'agent émulsionnant de base est la lécithine fractionnée.

7. Confiserie à teneur réduite en graisses selon la revendication 2, dans laquelle le au moins un autre agent émulsionnant est le polyérucate de saccharose.

8. Confiserie à teneur réduite en graisses selon la revendication 2, dans laquelle le au moins un autre agent émulsionnant est le polyricinoléate de polyglycérol.

9. Confiserie à teneur réduite en graisses selon la revendication 2, dans laquelle le au moins un autre agent émulsionnant est le polyricinolate de polyglycérol et le polyérucate de saccharose.

10. Confiserie à teneur réduite en graisses selon la revendication 1, ayant des valeurs de viscosité plastique inférieures à 100 poises et des seuils d'écoulement inférieures à 100 dynes/cm².

11. Confiserie à teneur réduite en graisses selon la revendication 1, dans laquelle la confiserie comprend moins de 23% en poids de graisses au total.

12. Procédé de préparation d'une confiserie à teneur réduite en graisses, comprenant une teneur totale en graisses de moins de 25% en poids et une combinaison d'agents émulsionnants constituée d'un agent émulsionnant de base et d'au moins un autre agent émulsionnant, ledit procédé comprenant :
a) le mélange de la graisse et des ingrédients de la confiserie contenant les solides;
b) le conchage du mélange d'ingrédients;
c) l'addition de l'agent émulsionnant de base au mélange;
d) l'addition du au moins un autre agent émulsionnant au mélange contenant l'agent émulsionnant de base pour former un mélange de confiserie;
e) le malaxage du mélange de confiserie; et
f) la formation de la confiserie à teneur réduite en graisses;
dans lequel l'agent émulsionnant de base est choisi dans le groupe constitué de la lécithine, de la lécithine fractionnée, du polyérucate de saccharose, du polystéarate de saccharose, de dérivés monophosphatés d'esters de mono- et diglycérides et d'acide diacétyltartrique, de phosphatides d'ammonium et de leurs combinaisons, et le au moins un autre agent émulsionnant est choisi dans le groupe constitué du polyérucate de saccharose, du polyricinoléate de polyglycérol et de leurs combinaisons, pourvu que, lorsque l'agent émulsionnant de base est uniquement formé de phosphatides d'ammonium, le au moins un autre agent émulsionnant ne soit pas uniquement du polyricinoléate de polyglycérol; et
dans lequel ladite combinaison d'agents émulsionnants permet d'obtenir la confiserie à teneur réduite en graisses ayant un seuil d'écoulement inférieur à 250 dynes/cm² et une viscosité plastique de moins de 100 poises.

13. Procédé selon la revendication 12, dans lequel la confiserie est du chocolat.

14. Procédé selon la revendication 12, ayant des valeurs de viscosité plastique de moins de 100 poises et des seuils d'écoulement de moins de 180 dynes/cm².

15. Procédé selon la revendication 12, dans lequel l'agent émulsionnant de base est présent en quantité d'environ 0,1% à environ 0,9% en poids du poids total du chocolat.

16. Procédé selon la revendication 12, dans lequel l'étape (d) comprend l'addition séquentielle des au moins deux agents émulsionnants.

17. Procédé selon la revendication 16, dans lequel les au moins deux agents émulsionnants sont le polyricinoléate de polyglycérol et le polyérucate de saccharose.
